Europäisches Patentamt

European Patent Office

Office européen des brevets

(19)

(11) **EP 0 635 184 B1**

(12) **FASCICULE DE BREVET EUROPEEN**

(45) Date de publication et mention
de la délivrance du brevet:
**27.12.1996 Bulletin 1996/52**

(21) Numéro de dépôt: **93907910.9**

(22) Date de dépôt: **30.03.1993**

(51) Int Cl.⁶: **H04L 29/02**

(86) Numéro de dépôt international:
**PCT/FR93/00318**

(87) Numéro de publication internationale:
**WO 93/20638 (14.10.1993 Gazette 1993/25)**

(54) **DISPOSITIF DE TRANSMISSION DE DONNEES POUR RESEAU A ACCES ALEATOIRE, AVEC RESOLUTION DE COLLISION PERFECTIONNEE, ET PROCEDE CORRESPONDANT**

EINRICHTUNG ZUR DATENUEBERTRAGUNG FUER NETZWERKEN MIT VIELFACHZUGRIFF UND VERBESSERTER KOLLISIONSAUFLOESUNG UND VERFAHREN DAFUER

DATA TRANSMISSION DEVICE AND METHOD FOR RANDOM ACCESS NETWORK HAVING ADVANCED COLLISION RESOLUTION

(84) Etats contractants désignés:
**DE ES GB IT NL SE**

(30) Priorité: **02.04.1992 FR 9204033**

(43) Date de publication de la demande:
**25.01.1995 Bulletin 1995/04**

(73) Titulaire: **INRIA INSTITUT NATIONAL DE RECHERCHE
EN INFORMATIQUE ET EN AUTOMATIQUE
Rocquencourt F-78153 Le Chesnay (FR)**

(72) Inventeurs:
• **JACQUET, Philippe
F-78530 Buc (FR)**
• **MUHLETHALER, Paul
F-78600 Maisons-Laffite (FR)**

(74) Mandataire: **Plaçais, Jean-Yves et al
Cabinet Netter,
40, rue Vignon
75009 Paris (FR)**

(56) Documents cités:
• **ELECTRO vol. 8, 1983, NEW YORK, US pages 10.5.1 - 10.5.10 G. RAMACHANDRAN 'A GENERAL PURPOSE HARDWARE APPROACH TO ETHERNET'**
• **PATENT ABSTRACTS OF JAPAN vol. 10, no. 340 (E-455)18 Novembre 1986 & JP-A-61 142 893**
• **COMPUTER JOURNAL vol. 31, no. 3, Juin 1988, LONDON GB pages 209 - 219 M. GOPALAKRISHNAN ET AL. 'Multiple Access Control Schemes for Local Area Networks with Multiple Priority Function'**

**Description**

L'invention concerne les réseaux informatiques qui permettent l'échange d'informations ou "données" entre différents postes.

Un tel réseau comprend classiquement un milieu de transmission, généralement un câble électrique ou à fibres optiques. En différents endroits de ce câble sont raccordés des stations ou postes, ce raccordement s'effectuant à travers une "interface-réseau".

Il est nécessaire que les postes se comprennent, malgré leur multiplicité. Dans certains réseaux informatiques, on fixe à cet effet une règle (multiplexage, jeton) selon laquelle au plus l'un des postes peut émettre sur le milieu de communication à un moment donné. Une autre technique autorise un "accès aléatoire" au réseau, c'est à dire que plusieurs postes peuvent émettre en même temps. Une conséquence de cet accès multiple est que des "collisions" peuvent se produire, et il faudra alors les résoudre.

Le réseau ETHERNET (marque déposée) régi par la norme dite IEEE 802.3 est du type à accès aléatoire. Le protocole de gestion du réseau est du type à accès multiple sensible à la porteuse avec détection de collision, ou CSMA/CD (Carrier Sense Multiple Access with Collision Detection).

L'une des qualités essentielles d'un tel réseau est son aptitude à effectuer rapidement une "résolution de collision". En effet, lorsqu'une émission a donné lieu à collision, il faut recommencer à émettre. Ceci a pour effet direct d'augmenter le besoin instantané de transmission. Il s'ensuit que, si un canal à accès multiple travaille avec un trafic très élevé, la résolution de collision risque de devenir d'autant plus longue, et par conséquent les temps d'attente pour une transmission réussie d'autant plus élevés.

Le Demandeur a observé par ailleurs que l'on peut distinguer au moins deux types de trafic de données :

a) les données issues de capteurs en temps réel, par exemple la voix (téléphonie) ou la vidéo (image);

b) les échanges de fichiers ou de tableaux de connaissances issus de mémoires de masse, qui sont des paquets de données pures.

Le Demandeur a également observé que les contraintes qui s'appliquent à l'échange de ces différents types de données sont assez divergentes.

Des données issues de capteurs en temps réel sont généralement assez fortement redondantes. Il en résulte que l'on peut admettre un taux de perte significatif de ces paquets de données sans dégradation notable de la qualité des informations transportées : on sait par exemple que les informations de téléphonie vocale, qui sont très redondantes, peuvent être largement coupées sans perte d'intelligibilité. Par contre, les paquets de données de téléphonie doivent être acheminés dans des délais stricts.

A l'opposé, les échanges de données de fichiers par exemple sont beaucoup moins sensibles aux délais de transmission. Par contre, ils ne peuvent supporter aucun taux de perte d'information, et sont très exigeants en termes de bande passante. En outre, ils ont besoin d'accusés de réception et de protocoles de contrôle de flux, ce qui n'est pas le cas pour les paquets de données vocales, par exemple.

Ceci pose différents problèmes, que l'invention entend venir aider à résoudre.

Un premier but de l'invention est de fournir une meilleure technique de résolution de collision, qui augmente l'efficacité d'un canal à accès multiple.

Un deuxième but de l'invention est de permettre l'emploi et la mise en oeuvre de classes de priorité, dans le fonctionnement de cette technique de résolution de collision.

Pour former un réseau informatique à partir d'un milieu de transmission ou canal, on associe à chaque poste de traitement de données un dispositif qui comprend :

- une interface-réseau, capable d'émission/réception de messages sur le canal, avec surveillance du canal pour établir des signaux d'événements, lesquels représentent sélectivement la détection du début d'une transmission sur le canal, la détection de toute nouvelle collision, et la détection du retour du canal à l'état vide, et
- un dispositif de gestion d'émission/réception, pour piloter l'interface-réseau en fonction des signaux d'événements.

Des moyens sont prévus, en principe dans l'interface-réseau, pour faire en sorte que, en cas de collision, l'émission soit maintenue (avec signalement de collision) pendant un temps suffisant pour que toutes les stations concernées (à portée des stations causes de la collision) aient détecté cette collision, après quoi toute transmission est interrompue. Il en résulte la définition d'une "tranche de collision".

Selon un premier aspect de l'invention, le dispositif comprend un registre d'observation du canal, qui reçoit tout signal d'événement, et établit en réponse un signal d'observation du canal, parmi un ensemble prédéterminé de possibilités, cet ensemble comprenant la transmission (émission ou réception), la "tranche de collision", ou la "tranche vide", la tranche temporelle de collision étant astreinte à une première durée minimale (C), et la tranche vide existant seulement lorsque l'état canal vide a perduré pendant une seconde durée minimale (B), au moins égale au temps maximum de propagation aller-retour d'un signal sur le canal, et inférieure à la première durée minimale.

On considère maintenant le moment où le dispositif de gestion dispose d'un nouveau paquet à transmettre, c'est-à-dire reçoit une requête d'émission d'un paquet de données. Il attend alors un nombre prédéterminé (>=1) de rafraîchissements de l'état du registre d'observation ("rafraîchissement" signifie changement d'état ou reconfirmation du même état). Une première tentative de transmission est autorisée ou non, et ce en fonction de la suite observée de changement d'état du registre d'observations. On appelle "insuccès" les cas où la tentative démission n'est pas autorisée ou ceux où elle s'est traduite par une collision. En cas d'insuccès, le dispositif de gestion réagit en initialisant un entier courant (E), à une valeur comprise entre un premier (O) et un second (M-1) entiers-limites, inclus. Ensuite, il fait varier l'entier courant (E), selon une loi prédéterminée, qui est fonction dudit signal d'observation, ou de suites de valeurs de ce signal d'observation. De préférence, il est fait en sorte que cette suite d'observations ne remonte pas au-delà de la dernière tentative d'émission ou du dernier insuccès répertorié.

La loi prédéterminée est de préférence choisie comme suit: elle tend à éloigner l'entier courant du premier entier-limite (O), en cas d'abondance de tranches de collision ; elle tend à l'en rapprocher en cas d'abondance de tranches vides. Le mot "abondance" vise ici le fait que l'on pourra utiliser toute représentation absolue ou relative (moyenne, par exemple) du nombre de tranches de collision, respectivement de tranches vides, obtenues sur l'intervalle de temps considéré.

Lorsque l'entier courant (E) atteint le premier entier-limite (O) le dispositif procède à une nouvelle observation du canal avant d'autoriser ou non une nouvelle tentative. En cas d'insuccès, le dispositif reprend le mécanisme décrit ci-dessus.

L'homme du métier comprendra que cette technique de résolution de collision ne nécessite l'observation permanente du canal qu'entre deux tentatives de transmission d'un même paquet. En d'autres termes, elle ne nécessite pas de maintenir à chaque instant un historique même partiel du canal, en amont de la dernière tentative de transmission du paquet concerné. Ceci marque l'originalité de la nouvelle technique par rapport au mode de résolution de collision d'Ethernet (Binary Exponential Back-off) et à celui décrit dans le brevet français N° 84 16 957, au nom du Demandeur, publié sous le N° 2 597 686 . Cette particularité confère à la technique proposée d'importantes propriétés de robustesse et d'efficacité.

De préférence, la valeur initiale de l'entier choisi (E) est sensiblement aléatoire. Il peut être fourni par un générateur pseudo-aléatoire opérant sur un entier d'au moins 10 bits, modulé par au moins un entier d'au plus 10 bits, spécifique du poste concerné, le résultat étant ramené à l'intervalle des limites dudit entier choisi (E).

Selon une variante de l'invention, l'entier courant est également rapproché du premier entier-limite en présence d'une transmission sans collision.

L'invention peut également être présentée sous la forme d'un procédé de résolution de collision dans un réseau de transmission de données du type à accès multiple, lequel procédé est susceptible des mêmes variantes que le dispositif décrit plus haut.

Selon une autre caractéristique de l'invention, il est prévu des données de priorité, et également un outil de comparaison fondé sur des données tirées de grandeurs pseudo-aléatoires pour privilégier l'émission des données de priorité supérieure dans la technique de résolution de collision précitée.

D'autres caractéristiques et avantages de l'invention apparaîtront à l'examen de la description détaillée qui va suivre et des dessins annexés, sur lesquels :

- la figure 1 est un schéma très simplifié d'un réseau informatique dont le milieu de transmission est filaire;

- la figure 2 est un schéma partiellement détaillé de l'interface-réseau d'un poste;

- la figure 3 est un diagramme d'états utile à la mise en oeuvre de l'invention;

- la figure 4 est un schéma fonctionnel de principe des mécanismes de contrôle d'émission et de résolution de collision utilisés selon l'invention;

- la figure 5 est un schéma fonctionnel plus détaillé des mécanismes de contrôle d'émission et de résolution de collision utilisés selon l'invention;

- la figure 6 est un schéma fonctionnel illustrant la mise en oeuvre d'un contrôle de priorité des messages selon l'invention; et

- la figure 7 est un schéma fonctionnel illustrant l'entretien de fonctions $p_i(t)$ utiles à la mise en oeuvre du contrôle de priorité.

Les dessins annexés sont, pour l'essentiel, de caractère certain. En conséquence, ils font partie intégrante de la description et pourront non seulement servir à compléter celle-ci, mais aussi contribuer à la définition de l'invention le cas échéant.

Par ailleurs, le Demandeur dépose ce jour une autre demande de brevet intitulée "Installation de transmission de données, au type réseau radio, et procédé correspondant". Du fait de relations techniques existant avec la présente Demande, la description et les dessins de cette autre Demande sont également incorporables à la présente description.

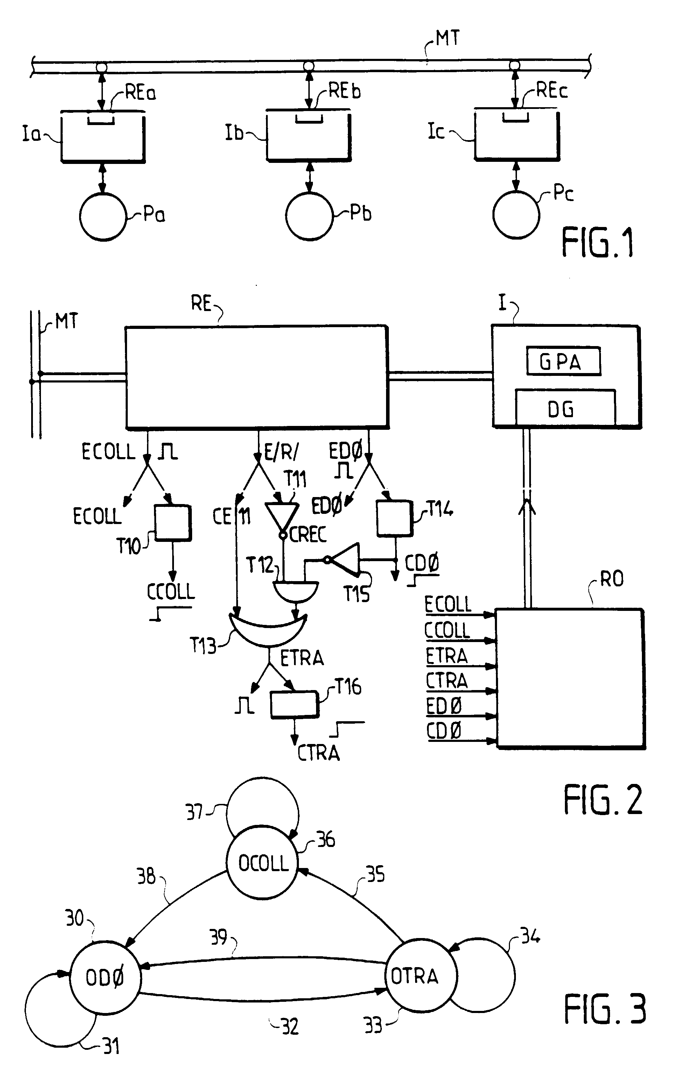

Sur la figure 1, un milieu de transmission MT est relié à des interfaces-réseaux la à lc, respectivement connectés à des postes Pa à Pc. C'est là la structure classique d'un réseau informatique de transmission de données, auquel peut s'appliquer le protocole CSMA/CD déjà évoqué, conformément à la norme IEEE 802.3.

Le spécialiste sait que les modèles de définition de telles interfaces sont définies "en couches" (norme ISO), à chacune desquelles est affectée une fonction précise. Ce découpage en couches fonctionnelles permet d'assurer la compatibilité d'organes du réseau de sources différentes, lorsqu'ils se trouvent interconnectés. Il sera fait référence dans la suite à cette notion de couche. On distinguera d'ailleurs les couches du protocole proprement dites, et les couches supérieures du protocole.

Les postes tels que Pa sont des postes de traitement de données (le mot traitement est utilisé ici au sens le plus élémentaire, ce traitement pouvant être très simple). Tous les traitements effectués dans le poste sont extérieurs à la transmission de données proprement dite. Mais il pourra exister dans le poste des opérations spécifiques tenant compte spécifiquement de la nature et de certaines conditions applicables à la transmission de données. Ce sont là les couches supérieures du protocole.

Les couches du protocole lui-même vont au contraire régir la transmission de données en ses conditions de base, d'une façon qui permette d'en assurer la sécurité.

Chaque interface réseau I est munie d'un circuit RE pour la liaison immédiate avec le réseau. Ces éléments I et RE sont séparés sur la figure 2.

Le bloc RE fournit par exemple trois signaux de détection, à savoir:

- ECOLL : une collision vient d'avoir lieu sur le canal ;
- E/R vrai si l'on est en émission, faux en réception ;
- EDO, qui signifie, en réception, qu'il n'y a pas de données reçues.

Le signal ED0 est mémorisé en T14 pour donner CD0, qui reste vrai tant qu'aucune donnée n'est reçue. Le signal E/R est complémenté par T11, pour donner REC, vrai en réception. REC est appliqué, avec le complément de CD0 par T15, à une fonction ET de T12, dont la sortie indique donc la réception effective de données. Enfin, une fonction OU en T13 fourni le signal ETRA qui représente le passage de l'état de canal vide à un début de transmission (émission ou réception), et est mémorisé en T16 pour donner l'état de transmission CTRA.

Toute détection de collision ECOLL est mémorisée en CCOLL, répétitivement. On sait prolonger toute émission sujette à collision pour qu'elle dure pendant un temps minimal C, au moins égal au temps maximum de propagation aller-retour d'un signal sur le canal MT, augmenté du temps nécessaire pour détecter une collision (en tout, la durée minimale nécessaire pour qu'une collision soit détectée par toutes les stations connectées au canal MT ; elle est appelée ici "tranche de collision").

Les signaux ED0 et CD0 représentent le retour du canal MT à l'état vide, soit à la fin d'une transmission réussie, soit à la fin d'une transmission sujette à collision.

En d'autres termes, le détecteur RE, que l'on peut appeler également "traceur", permet d'établir les informations suivantes, de préférence sous forme d'impulsions ou transitions temporelles et d'états:

- passage de l'état de canal vide à un début de transmission (émission ou réception),
- détection d'une collision, au cours d'une phase de transmission,
- fin de transmission avec succès (retour à l'état vide),
- fin de transmission avec collision (retour à l'état vide).

A partir de là, la présente invention prévoit la définition d'observations, qui peuvent être matérialisées dans un registre d'observation RO (Figure 2), obéissant au diagramme d'états de la figure 3.

Il convient d'abord de définir la notion de "tranche vide".

La "tranche vide" est un intervalle de temps dont la durée est déterminée à l'avance, et pendant laquelle le canal de transmission est vide, c'est-à-dire ne supporte aucun message. La durée minimale d'une tranche vide est supérieure au temps de propagation d'un signal de bout en bout sur l'ensemble du canal.

En d'autres termes, la tranche vide est l'intervalle de temps nécessaire pour qu'un observateur du canal soit assuré qu'aucune station n'a commencé à transmettre, compte tenu de l'influence des temps de propagation.

Selon la présente invention, on note C et D les durées moyennes respectives de la tranche de collision et de la tranche vide. Ces durées sont fixées en fonction de la structure du canal de transmission utilisé. Dans le cas d'un réseau radio, tel que décrit dans la demande de brevet parallèle précitée, la durée C doit être en principe choisie assez longue, en raison des techniques de codage, avec entrelacement, utilisées pour la détection d'erreurs. En effet, il faut alors avoir reçu une quantité d'information substantielle avant décodage pour pouvoir obtenir le premier bit décodé.

Sur la figure 3, on suppose que l'on part d'une tranche vide (30) représentant l'observation OD0. Chaque fois qu'un temps B s'est écoulé, on renouvelle (31) l'observation tranche vide.

Tout début de transmission (32) fera passer à l'observation OTRA en 33. Cette observation est renouvelable (34), si entre temps on passe à l'événement canal vide pendant un temps inférieur à B.

Le retour à l'état vide fera revenir à l'observation OD0 en 30, mais seulement au bout du temps B (flèche 39).

En cas de collision (35), on passe à l'observation OCOLL, en 36. Cette observation est renouvelable (37) chaque fois qu'un temps C s'est écoulé. Là aussi, le retour à l'état vide fera revenir à l'observation OD0 en 30, mais seulement au bout du temps B (flèche 38).

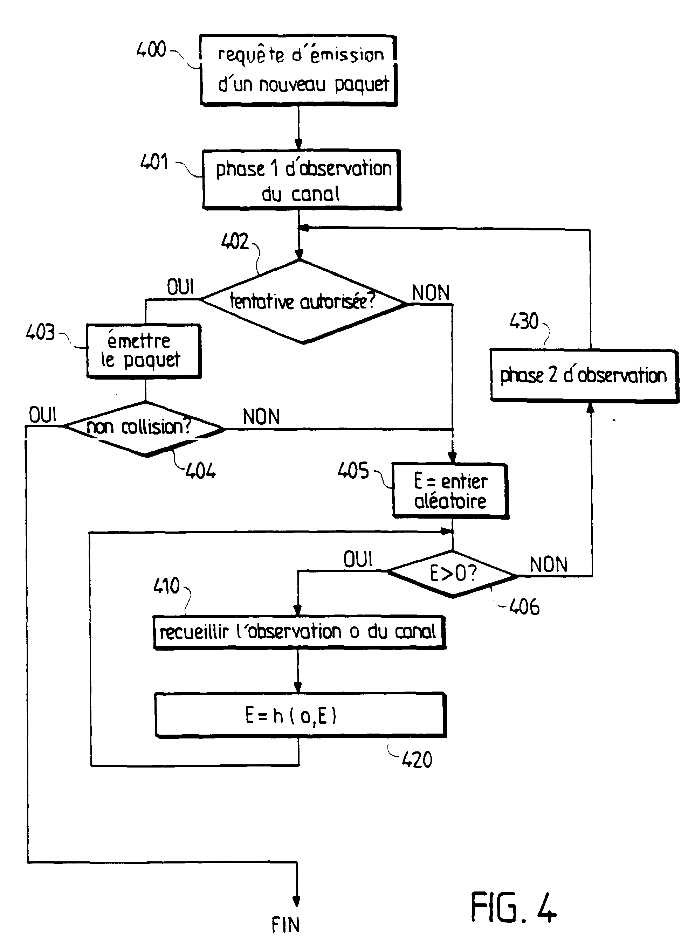

Il est maintenant fait référence à la figure 4. Elle illustre un mécanisme de résolution de collision réalisable à l'aide du dispositif de gestion incorporé au bloc I de la figure 2.

L'entrée 400 de la figure 4 représente une situation dans laquelle un paquet de données est à émettre.

L'étape 401 désigne la première phase d'observation du canal, dite phase 1.

L'étape 402 détermine en fonction de la phase précédente d'observation si le paquet peut faire l'objet d'une tentative d'émission. Par exemple, on attend la fin de la tranche en cours, donc le rafraîchissement du registre d'observation; l'émission n'est autorisée que si l'observation validée en fin de tranche est "vide" ou "transmission". Plus généralement, les étapes 401 et 402 peuvent se fonder sur tout critère prédéterminé impliquant une suite d'observations de longueur déterminable.

Si oui, l'étape 403 commande l'émission du paquet. Le test 404 détermine s'il y a ou non collision (observation OCOLL) sur cette émission. On sait qu'en présence d'une collision, l'interface-réseau prévoit la continuation de l'émission jusqu'à la fin de la durée minimale C d'une tranche de collision.

En l'absence de collision, l'émission est réussie, le paquet de données est validé pour l'émission, et c'est la fin du mécanisme.

En cas d'insuccès, on passe à une deuxième partie du mécanisme, qui commence à l'étape 405 et concerne la résolution de collision proprement dite.

Cette étape 405 consiste en le tirage au sort d'un entier E satisfaisant des conditions prédéterminées, mais de préférence défini d'une façon aléatoire. Dans une réalisation particulière, il est également tenu compte d'un entier spécifique de la station, éventuellement d'un entier d'horloge, c'est-à-dire relié au temps.

L'entier E est compris entre deux entiers-limites, que l'on note ici 0 et M-1 (avec M au moins égal à 2).

L'étape 406 recherche si la valeur courante de E est zéro, auquel cas on repasse à l'étape 402 après une nouvelle phase d'observation du canal 430, dite phase 2. Cette phase 2, qui peut être la même que la phase 1, délivre ou non une autorisation de tenter d'émettre.

Sinon, l'étape 410 consiste à recueillir l'observation en cours du canal, par exemple par lecture du registre RO. Et l'étape 420 consiste à mettre à jour l'entier E en fonction de sa valeur précédente et de la ou des observations. C'est à dire que la mise à jour peut se faire soit en fonction de la dernière observation, ou soit de la suite ou séquence des dernières observations. Après cette mise à jour, on retourne à l'étape 406.

En d'autres termes, on met à jour l'entier courant (E) en le faisant varier selon une loi prédéterminée $h(o, E)$, qui est fonction du signal d'observation o (ou de suites de valeurs de ce signal d'observation) et de la valeur précédente E.

Il est requis que cette loi tende à éloigner l'entier courant du premier entier-limite (0), en cas d'abondance de tranches de collision ; elle tendra à l'en rapprocher en cas d'abondance de tranches vides.

Lorsque l'entier courant (E) atteint le premier entier-limite (0), une tentative d'émission sera de nouveau autorisée ou non (étape 402), après une phase d'observation du canal (étape 430).

On donne ci-après quelques exemples de lois spécifiques, avant de décrire une réalisation particulière.

En général on prend comme observation l'une des trois possibilités suivantes : "tranche vide", tranche de collision", et "transmission réussie" (c'est-à-dire période de transmission sans collision signalée). Les lois de variation de l'entier courant (E) peuvent être :

- $h("collision", E) = E+M-1$ ;

- $h("tranche vide", E) = E-1$ ;

- $h("transmission réussie", E) = E$ (ou E-1, en variante).

Et pour les phases d'observation en vue d'autorisation d'émission :

- phase 1 et 2 : "autorisation d'émettre dès la prochaine fin de tranche " (rafraîchissement du registre d'observation).

Pour la phase 1, on peut admettre la variante suivante :

- phase 1 : "attendre la prochaine fin de tranche, et autorisation d'émettre sauf si la tranche qui se termine est une tranche de collision".

Il existe des réalisations un peu plus sophistiquées qui font appel à des observations plus étendues. Par exemple, quand M=2, on a le protocole modifié suivant :

- Phase 2 : "attendre la prochaine fin de tranche, et autorisation d'émettre sauf si on est dans une suite de tranches vides consécutive à une tranche de collision et que le dernier échec remonte à plus d'une tranche vide" ;

- $h("suite de tranches vides après collision", E) = E$, (si E>1), sinon $h'("tranche vide", E) = E-1$ (c'est-à-dire lorsque la dernière tranche non vide n'est pas une tranche de collision).

Cette version peut présenter de meilleures performances que les versions de base. Néanmoins, ce protocole modifié peut poser problème si le réseau n'est pas d'une grande fiabilité.

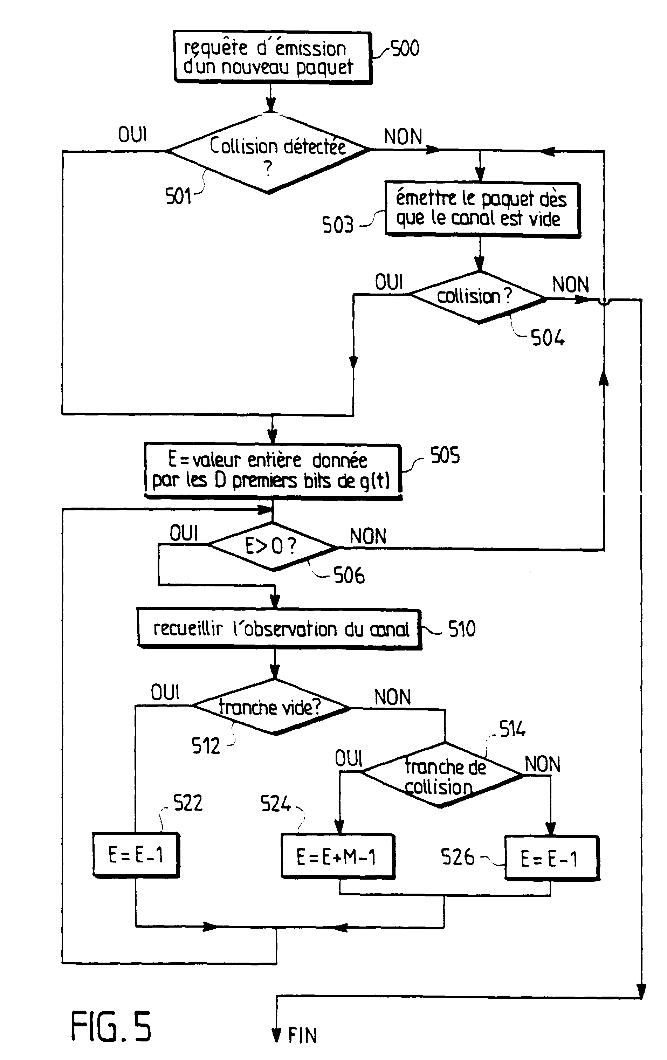

Un mode de réalisation particulier sera maintenant décrit en référence à la figure 5 (dont les étapes correspondent en principe à celles de la figure 4, augmentées de 100). A l'étape 501, l'autorisation d'émettre repose simplement sur la détection ou non d'une collision avant le premier passage du canal à l'état vide. L'étape 503 consiste en une émission dès que le canal est vide. Si E = 0 à l'étape 506, on y reviendra directement (pas d'étape physique correspondant à 430, figure 4, la condition de phase 2 étant la vacuité du canal). Les étapes 512 à 526 sont une décomposition de l'étape 420 de la figure 4.

Pour résumer ce mode de réalisation particulier :

- ce que l'on appelle "observation" ou "o" est l'une des trois possibilités suivantes : "tranche vide", "tranche de collision", et "transmission réussie".

- cet ensemble est considéré de la manière suivante. On est en "transmission réussie" tant qu'il n'y a pas événement collision (en fait, "tranche de collision"), et que l'état canal vide n'a pas duré assez (durée B) pour constituer une "tranche vide". On ne passe en "tranche vide" que lorsque l'événement canal vide a perduré pendant la durée B. Quand on est passé en "tranche de collision", ceci dure au moins pendant le temps C.

La loi prédéterminée h(o,E), est alors :

h("collision",E) = E+M-1
h("vide",E) = max(E-1;0)
où MAX prend le plus élevé de ses 2 arguments, et, suivant la variante choisie,

soit h("transmission",E) = E
soit h("transmission",E) = E-1

Ceci peut être dénommé "protocole de résolution de collision en pile".

Il est indiqué plus haut que l'entier E est compris entre deux entiers-limites, que l'on note ici 0 et M-1. On a parlé aussi d'incrémentation et de décrémentation. Bien entendu, toutes ces définitions sont relatives, en ce sens que toutes les grandeurs dites entières peuvent être à volonté multipliées ou divisées par un même facteur en conservant le fonctionnement de l'invention. De même, on peut intervertir le rôle des deux limites, ainsi que les opérations d'incrémentation et décrémentation.

Par ailleurs, il est souhaitable, mais non absolument impératif, que l'entier-limite M-1 soit égal à la partie entière du rapport C/B entre la durée de la tranche de collision et la durée de la tranche vide.

Un moyen utile à la mise en oeuvre de ce mécanisme est un générateur pseudo-aléatoire, qui va fournir en fonction du temps un signal représentatif d'un entier aléatoire que l'on note g(t).

Un exemple assez général de générateur pseudo-aléatoire consiste à utiliser un générateur congruentiel de nombres entiers, capable de fournir des nombres de D bits en une séquence d'apparence aléatoire pendant un temps considérable. D est de préférence de l'ordre de 10. Les nombres ainsi présentés se succèdent à une fréquence choisie, à laquelle on associera une période $T_A$.

Le nombre g(t) est par exemple un nombre compris entre 0 et 1, qui a pour écriture binaire les D bits en question.

De façon connue, la génération de nombres pseudo-aléatoires de ce type peut être fondée sur un opérateur utilisant deux nombres entiers spécifiques p et q, et fournissant un nombre entier calculé x(t) par l'opération

$$x(t) \equiv p * x(t\text{-}T_A) + q \ (\text{modulo } 2^D)$$

L'expression (modulo $2^D$) signifie que le résultat l'opération est ramené au reste de sa division entière par $2^D$, comme le savent les hommes du métier.

Les hommes du métier savent également que l'on peut choisir les nombres p et q de façon que la suite des nombres x(t) décrivent tous les nombres de D bits possibles, d'une façon quasi-désordonnée, avec une période de bouclage de $2^D * T_A$.

A l'aide d'un tel opérateur, le nombre g(t) est obtenu par l'opération

$$g(t) \equiv x(t) + i + k \ (\text{modulo } 2^D)$$

Dans cette relation, i est un entier spécifique à la station, par exemple le numéro de série d'un composant, ou l'adresse de la station dans le réseau; k est la valeur entière d'un compteur d'horloge locale à l'instant considéré.

Il peut se faire que le numéro de i possède une longueur excédant D bits. Dans ce cas, on découpe le numéro choisi en différents paquets de tailles D bits et les sous-paquets ainsi obtenus sont utilisés successivement et périodiquement à la place de i.

Il est aussi possible d'opérer les mises à jour du nombre g(t) uniquement au moment où le mécanisme consulte et fait usage de ce nombre g(t), au lieu de s'en tenir à une remise à jour périodique de période $T_A$.

Il est aussi possible qu'à chaque consultation, une opération autre que celle de la mise à jour soit effectuée sur le nombre g(t) (par exemple de ne retenir qu'un nombre limité de bits), afin de maintenir l'apparence aléatoire entre deux consultations séparées de moins de $T_A$ unités de temps.

On considérera maintenant la question des priorités d'émission de messages.

On définit des instants de contrôle avec une périodicité $T_A$.

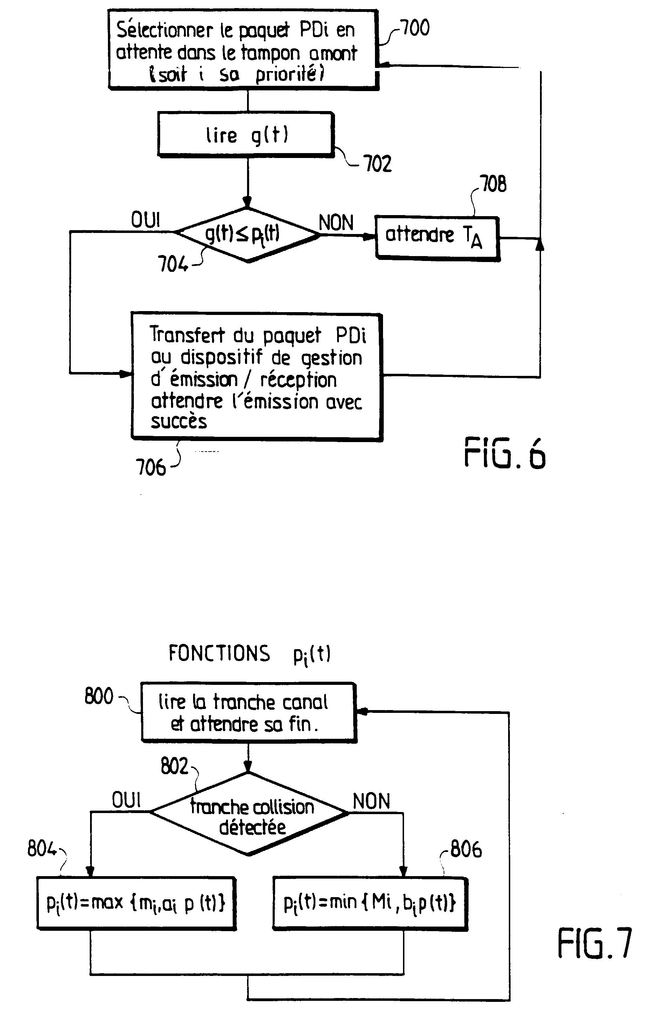

L'étape 700 (fig. 6) sélectionne le paquet en attente d'émission $PD_i$ qui possède la plus forte priorité 1.

A l'étape 702, on tirera au sort un nombre pseudo-aléatoire, dont on note g(t) la valeur en cours (ce g(t) peut être le même que pour la résolution de collision).

En parallèle, on entretient une série de grandeurs de probabilité $p_i(t)$, en nombre égal au nombre n de niveaux de priorité à gérer (i va de 1 à n). Ceci sera décrit en détail plus loin.

Il est clair que le gestionnaire d'émission/réception ne peut en transmission gérer qu'un seul paquet à la fois. On suppose que d'autres paquets en attente de transmission peuvent être stockés dans un tampon amont géré par les couches supérieures du protocole. On impose le fait que tout paquet à transmettre doit préalablement être stocké dans le tampon amont avant d'être dirigé vers le gestionnaire d'émission/réception de la manière décrite ci-après.

Lorsque le gestionnaire d'émission/réception est vide, on procède (700) pour tout paquet stocké dans le tampon amont - soit i sa priorité - à la comparaison (704) entre la grandeur $p_i(t)$ associée et le nombre $g(t)$ tiré à l'étape 702. L'ordre de consultation des paquets est laissé au choix et on renouvelle l'opération lorsque tous les paquets ont été consultés. Le paquet $PD_i$ n'est transmis (706) au gestionnaire d'émission/réception avec requête d'émission que si $g(t) <= p_i(t)$ en 704. Dans ce cas le mécanisme de sélection est mis en sommeil jusqu'à ce que le gestionnaire d'émission/réception redevienne vide (c'est-à-dire lorsque le paquet $PD_i$ précédent a été validé pour l'émission). Sinon, on attend un temps TA et l'on retourne en 700.

Une variante dite "à préemption" consiste à ne pas attendre que le gestionnaire d'émission/réception soit vide pour effectuer la sélection d'un nouveau paquet dans le tampon amont. Dans ce cas, il est préférable que le transfert n'ait lieu que si la priorité du nouveau paquet sélectionné est supérieure à la priorité du paquet déjà présent dans le gestionnaire d'émission/réception. Ce dernier paquet sera alors rapatrié dans le tampon amont.

L'homme du métier comprendra que la gestion de priorité ne trouve son sens qu'à partir du moment où la demande de communication est telle que les performances du réseau risquent de s'en trouver dégradées. Le rôle du mécanisme de gestion de priorité est de décider en fonction des contraintes de trafic, le transfert de tel paquet du tampon amont vers le dispositif de gestion des collisions, et d'ainsi contrôler et limiter le trafic global instantané qui a effectivement accès au médium de communication en fonction des priorités en concurrence.

Ceci peut s'appliquer non seulement pour donner des priorités différentes à des trames vocales et à des trames de données (fichiers), mais aussi par exemple à des trames de service, telles que les trames dites ADF, utiles au réseau radio de la Demande de brevet parallèle précitée.

Chaque grandeur $p_i(t)$ est entretenue (Figure 7) en fonction des "observations" définies plus haut, grâce à une autre loi ou fonction de réactualisation $q_i( p_i(t), "o")$, où "o" désigne une observation, ou une suite d'observations. Comme précédemment, même si elle est identique à la précédente, toute observation (ou suite d'observations) provoque une mise à jour de $p_i(t)$.

La loi ou fonction $q()$ doit tendre à diminuer $p_i(t)$ en cas d'abondance de tranches de collision ; elle tendra à l'augmenter en cas d'abondance de tranches vides.

Dans un mode de réalisation particulier, les "observations" ou "o" sont uniquement l'une des trois possibilités précitées : "tranche vide", "tranche de collision", et "transmission réussie".

On admet aussi que chaque quantité $p_i(t)$ est convenablement initialisée, sa valeur initiale pouvant d'ailleurs être 0.

La loi prédéterminée $q_i( p_i(t), "o")$ est alors:

$$q_i( p_i(t), "collision") = Max \{ m_i ; a_i * p_i(t) \}$$

où MAX prend le plus élevé de ses 2 arguments,

$$q_i( p_i(t), "vide") = Min \{ M_i ; b_i * p_i(t) \}$$

où Min prend le plus faible de ses 2 arguments, et, suivant la variante choisie,

$$q_i( p_i(t), "transmission") = p_i(t)$$

ou bien

$$q_i( p_i(t), "transmission") = Min \{ M_i ; b * p_i(t) \}$$

Cette variante est couplée à celles de la résolution de collision, définies plus haut.

Il est nécessaire que $a_i$, $m_i$ et $M_i$ soient strictement inférieurs à 1, et $b_i$ strictement supérieur à 1.

La cohérence du mécanisme de priorité implique que, pour tout $i > 0$,

$$a_i * (b_i)^{M-1} > a_{i-1} * (b_{i-1})^{M-1}$$

Ainsi, l'ajustement des paramètres a et b en fonction du "degré de branchement" M se fait en tenant compte du produit de a, et de b porté lui-même à la puissance M-1.

Si l'on utilise le protocole de résolution de collision en pile (mode de réalisation détaillé défini plus haut), il est requis que tous les produits $a_i * (b_i)^{M-1}$ soient inférieurs à 1.

En fait, plus ce produit est proche de l'unité, moins la quantité de trafic instantané ne subit de restriction et plus les performances en utilisation critique du réseau sont dégradées.

## Revendications

1. Dispositif pour connecter un poste de traitement de données à un canal ou milieu de transmission, en vue de sa participation à un réseau informatique, comprenant:

- une interface-réseau (I;RE), capable d'émission/réception de messages sur le canal, avec surveillance du canal pour établir des signaux d'événements, lesquels représentent sélectivement la détection du début d'une transmission sur le canal, la détection de toute nouvelle collision, et la détection du retour du canal à l'état vide,
- un dispositif de gestion d'émission/réception (DG), pour piloter l'interface-réseau en fonction des signaux d'événements, et
- un moyen pour faire en sorte que, en cas de collision sur émission locale, l'émission soit maintenue avec signalement de collision pendant au moins une première durée minimale (C), après quoi toute transmission est interrompue,

caractérisé en ce qu'il comprend un registre d'observation (RO) du canal, qui reçoit les signaux d'événement, et établit en réponse un signal dit d'observation du canal, ce signal d'observation ayant un ensemble prédéterminé d'états possibles, ensemble qui comprend la transmission réussie (émission ou réception), la "tranche de collision", ou la "tranche vide", tandis que des instants de rafraîchissement du registre d'observation sont définis au moins à chaque événement canal vide, et en ce que le dispositif de gestion (DG) comprend des moyens pour réagir à une requête d'émission d'un nouveau paquet de données par :

a) un mode normal consistant à attendre le prochain rafraîchissement du registre d'observation, et à effectuer ou non une première tentative d'émission, en fonction d'un critère prédéterminé, appliqué à l'état du registre d'observation, avant ce rafraîchissement,

b) en cas d'insuccès (refus d'émission ou collision),

b1) l'initialisation d'un entier courant (E), à une valeur comprise entre un premier (0) et un second (M-1) entiers-limites, inclus, b2) la modification de l'entier courant (E), à chaque changement d'état du registre d'observation, selon une loi prédéterminée qui tend à éloigner l'entier courant du premier entier-limite (0) en cas d'abondance de tranches de collision, et à l'en rapprocher en cas d'abondance de tranches vide,

un retour au mode normal a) n'étant autorisé que lorsque l'entier courant (E) a atteint le premier entier-limite (0), de sorte que la réaction du dispositif de gestion à une requête d'émission d'un nouveau paquet de données est indépendante de l'historique du canal, en amont du dernier mode normal exécuté.

2. Dispositif selon la revendication 1, caractérisé en ce que le critère prédéterminé comprend l'absence de tranche de collision.

3. Dispositif selon l'une des revendications 1 et 2, caractérisé en ce que l'observation transmission (réussie) est constatée, après un événement début de transmission, lors d'un événement canal vide non précédé d'une collision depuis le début de la transmission, en ce que l'observation tranche temporelle de collision est constatée à l'événement canal vide qui suit ladite émission avec signalement de collision, et en ce que l'observation tranche vide est constatée lorsque l'événement canal vide a perduré pendant une seconde durée minimale (B).

4. Dispositif selon l'une des revendications 1 à 3, caractérisé en ce que la valeur initiale de l'entier choisi (E) est sensiblement aléatoire.

5. Dispositif selon l'une des revendications 1 à 4, caractérisé en ce que l'entier courant est également rapproché du premier entier-limite en présence d'une transmission sans collision.

6. Dispositif selon l'une des revendications 1 à 5, caractérisé en ce que ladite loi prédéterminée comprend :

. tant que l'entier courant (E) n'est pas égal au premier entier-limite (0), incrémenter l'entier courant d'un premier pas choisi (M-1), si l'état du canal est tranche de collision, ou décrémenter l'entier courant d'un second pas choisi (1), si l'état du canal est tranche vide, le rapport du premier pas au second étant sensiblement égal à l'écart (M-1) entre les deux entiers-limites.

7. Dispositif selon l'une des revendications 1 à 6, caractérisé en ce que le dispositif de gestion d'émission/réception (DG) est inhibé pour l'émission si un état de collision existe déjà au moment où il reçoit une requête d'émission.

8. Dispositif selon l'une des revendications 1 à 7, caractérisé en ce que l'écart (M-1) entre les deux entiers-limites est sensiblement égal à la partie entière du rapport de la première durée (C) à la seconde (B).

9. Dispositif selon l'une des revendications 1 à 8, caractérisé en ce que l'entier choisi (E) est fourni par un générateur pseudo-aléatoire (GPA) opérant sur un entier d'au moins 10 bits, modulé par au moins un entier d'au plus 10 bits, spécifique du poste concerné, le résultat étant ramené à l'intervalle des limites dudit entier choisi (E).

10. Dispositif selon la revendication 9, caractérisé en ce que l'entier choisi (E) est fourni par un générateur pseudo-aléatoire opérant sur un entier d'au moins 10 bits, modulé par au moins un entier d'au plus 10 bits, spécifique du poste concerné, et par un entier d'horloge, le résultat étant ramené à l'intervalle des limites dudit entier choisi (E).

11. Dispositif selon l'une des revendications 1 à 10, caractérisé en ce que les requêtes d'émission sont accompagnées d'une information de priorité, prise dans un jeu prédéterminé de classes de priorité, et en ce que le dispositif de gestion (DG) entretient, pour chaque classe de priorité, une grandeur ($p_i$) représentative du taux d'encombrement du milieu de transmission, compte-tenu de la priorité, tandis que toute requête en cours n'est prise en compte que si ladite grandeur, pour sa classe de priorité, est dans une relation prédéterminée avec une grandeur aléatoire (g(t)).

12. Dispositif selon la revendication 11, caractérisé en ce que chaque grandeur ($p_i$) varie selon une loi prédéterminée, fonction dudit signal d'observation, pour augmenter l'encombrement qu'elle représente, en cas de tranche de collision, et le diminuer en cas de tranche vide.

13. Dispositif selon la revendication 12, caractérisé en ce que la grandeur ($p_i$) est également modifiée pour diminuer l'encombrement qu'elle représente, en présence d'une transmission sans collision.

14. Dispositif selon l'une des revendications 11 à 13, caractérisé en ce que les grandeurs ($p_i$) et la grandeur aléatoire (g(t)) sont normalisées à l'unité, la relation prédéterminée étant une comparaison de la grandeur aléatoire à la grandeur représentative ($p_i$) concernée.

15. Procédé de résolution de collisions, dans un réseau de transmission de données du type à accès aléatoire, où chaque poste est muni d'une interface-réseau apte à l'émission/réception sur un milieu de transmission ou canal, avec surveillance du canal afin d'établir des signaux d'événements qui représentent sélectivement la détection d'un début de transmission, la détection de toute nouvelle collision, et la détection du retour du canal à l'état vide,

dans lequel, consécutivement à une requête d'émission d'un paquet de données, on émet le paquet dès obtention de l'état canal vide, avec, en l'absence de collision sur cette émission, validation de l'émission du paquet de données en cours, et retour à l'attente d'une requête d'émission d'un autre paquet de données,

tandis qu'en présence d'une collision sur cette émission, l'émission est prolongée pendant une première durée choisie (C), dit "tranche de collision", puis interrompue,

caractérisé en ce que, en réponse à tout signal d'événement, on établit un signal d'observation du canal parmi un ensemble prédéterminé de possibilités, cet ensemble comprenant la transmission (émission ou réception), la "tranche de collision", et la "tranche vide", la tranche temporelle de collision étant astreinte à une première durée minimale (C), à partir de toute nouvelle détection de collision, et la tranche vide existant seulement lorsque l'état canal vide a perduré pendant une seconde durée minimale (B), au moins égale au temps maximum de propagation aller-retour d'un signal sur le canal, et inférieure à la première durée minimale (C), et en ce que, en présence d'une collision,

i) on initialise un entier courant (E), à une valeur comprise entre un premier (0) et un second (M-1) entiers-limites, inclus,

ii) à toute nouvelle observation, on fait varier l'entier courant (E), selon une loi prédéterminée, fonction de ladite observation, pour l'éloigner du premier entier-limite (0), en cas d'abondance de tranches de collision, et l'en rapprocher en cas d'abondance de tranches vides,

iii) l'émission n'étant possible que lorsque l'entier courant (E) atteint le premier entier-limite (0).

## Patentansprüche

1. Vorrichtung um ein Datenverarbeitungsterminal hinsichtlich seiner Teilnahme an einem Datennetz zu verbinden mit einem Übertragungskanal oder einer Übertragungseinrichtung, umfassend:

- ein Netz-Interface (I;RE), fähig zum Senden/ Empfangen von Nachrichten bzw. Systemmeldungen auf dem Kanal, mit Überwachung des Kanals, um Ereignissignale zu erstellen, die selektiv die Detektion des Beginns einer Übertragung auf dem Kanal, die Detektion jeder neuen Kollision und die Detektion der Rückkehr des Kanals zum Leerzustand bzw. -status repräsentieren,

- eine Sende-/Empfangs-Verwaltungsvorrichtung (DG), um das Netz-Interface in Abhängigkeit von den Ereignissignalen zu steuern, und
- eine Einrichtung, um zu bewirken, daß im Falle von Kollision bei einer lokalen Sendung die Sendung während wenigstens einer ersten Minimaldauer (C) mit Kollissionssignalisierung aufrechterhalten wird, wonach jegliche Übertragung unterbrochen wird,

**dadurch gekennzeichnet,** daß sie ein Kanalbeobachtungsregister (RO) umfaßt, das die Ereignissignale empfängt und als Antwort ein sogenanntes Kanalbeobachtungssignal erstellt, wobei dieses Beobachtungssignal eine festgelegte Menge von möglichen Zuständen bzw. Status hat und diese Menge die erfolgreiche Übertragung (Sendung oder Empfang), die "Kollisionsscheibe", oder die "Leerscheibe" umfaßt, während Auffrisch-Zeitpunkte des Beobachtungsregisters wenigstens bei jedem Kanal-leer-Ereignis definiert werden, und dadurch, daß die Verwaltungsvorrichtung (DG) Einrichtungen umfaßt, um auf eine Sendeabfrage eines neuen Datenpakets zu reagieren durch:

a) einen Normalmodus, darin bestehend, die nächste Auffrischung des Beobachtungsregisters abzuwarten und einen ersten Sendeversuch durchzuführen oder nicht, abhängig von einem festgelegten Kriterium, angewendet auf den Status des Beobachtungsregisters, vor dieser Auffrischung,
b) im Falle von Mißerfolg (Sendeverweigerung oder Kollision)

b1) die Initialisierung einer laufenden Ganzzahl (E) mit einem Wert enthalten zwischen, einschließlich, einer ersten (0) und einer zweiten (M-1) Grenz-Ganzzahl,
b2) die Modifizierung der laufenden Ganzzahl (E) bei jedem Statuswechsel des Beobachtungsregisters nach einem festgelegten Gesetz, das bestrebt ist, im Falle von Häufigkeit von Kollisionsscheiben die laufende Ganzzahl von der ersten Grenz-Ganzzahl (0) zu entfernen, und sie ihr im Falle von Häufigkeit von Leerscheiben zu nähern,

wobei eine Rückkehr zum Normalmodus a) nur zugelassen wird, wenn die laufende Ganzzahl (E) die erste Grenz-Ganzzahl (0) erreicht hat, so daß die Reaktion der Verwaltungsvorrichtung auf eine Sendeabfrage eines neuen Datenpakets unabhängig ist vom dem Kanalbericht (historique du canal) vor dem letzten ausgeführten Normalmodus.

2. Vorrichtung nach Anspruch 1, dadurch gekennzeichnet, daß das festgelegte Kriterium das Ausbleiben einer Kollisionsscheibe umfaßt.

3. Vorrichtung nach einem der Ansprüche 1 und 2, dadurch gekennzeichnet, daß die Beobachtung "Übertragung" (durchgekommen) bestätigt wird nach einem Übertragungsbeginn-Ereignis, bei einem Kanal-leer-Ereignis ohne vorhergehende Kollision seit dem Beginn der Übertragung, dadurch, daß die Beobachtung "zeitliche bzw. kurzzeitige Kollisionsscheibe" bestätigt wird bei dem Kanal-leer-Ereignis, das besagter Sendung mit Kollisionssignalisierung folgt, und dadurch, daß die Beobachtung "Leerscheibe" bestätigt wird, wenn das Kanal-leer-Ereignis während einer zweiten Minimaldauer (B) angedauert hat.

4. Vorrichtung nach einem der Ansprüche 1 bis 3, dadurch gekennzeichnet, daß der Anfangswert der gewählten Ganzzahl (E) im wesentlichen zufällig ist.

5. Vorrichtung nach einem der Ansprüche 1 bis 4, dadurch gekennzeichnet, daß die laufende Ganzzahl angesichts einer Übertragung ohne Kollision ebenfalls der ersten Grenz-Ganzzahl angenähert wird.

6. Vorrichtung nach einem der Ansprüche 1 bis 5, dadurch gekennzeichnet, daß das genannte festgelegte Gesetz umfaßt:
solange die laufende Ganzzahl (E) nicht gleich der ersten Grenz-Ganzzahl (0) ist, die laufende Ganzzahl um einen ersten gewählten Schritt (M-1) zu inkrementieren, wenn der Kanalzustand bzw.

- status Kollisionsscheibe ist, oder die laufende Ganzzahl um einen zweiten gewählten Schritt (1) zu dekrementieren, wenn der Kanalzustand Leerscheibe ist, wobei das Verhältnis des ersten Schritts zum zweiten Schritt im wesentlichen gleich dem Abstand (M-1) zwischen den beiden Ganzzahlen ist.

7. Vorrichtung nach einem der Ansprüche 1 bis 6, dadurch gekennzeichnet, daß die Sende-/Empfangs-Verwaltungsvorrichtung (DG) für das Senden gesperrt ist, wenn zu dem Zeitpunkt, wo sie eine Sendeabfrage erhält, schon ein Kollisionszustand herrscht.

8. Vorrichtung nach einem der Ansprüche 1 bis 7, dadurch gekennzeichnet, daß der Abstand (M-1) zwischen den beiden Grenz-Ganzzahlen im wesentlichen gleich dem ganzzahligen Teil des Verhältnisses der ersten Zeitdauer (C) zur zweiten (B) ist.

9. Vorrichtung nach einem der Ansprüche 1 bis 8, dadurch gekennzeichnet, daß die gewählte Ganzzahl (E) durch einen Pseudozufallsgenerator (GPA) geliefert wird, der mit einer Ganzzahl mit wenigstens 10 Bit arbeitet, moduliert durch wenigstens eine Ganzzahl mit höchstens 10 Bit, spezifisch für das betreffende Terminal, wobei das Resultat zurückgebracht wird zu dem Intervall bzw. Zwischenraum der Grenzen der gewählten Ganzzahl (E).

10. Vorrichtung nach Anspruch 9, dadurch gekennzeichnet, daß die gewählte Ganzzahl (E) durch einen Pseudozufallsgenerator geliefert wird, der mit einer Ganzzahl mit wenigstens 10 Bit arbeitet, moduliert durch wenigstens eine Ganzzahl mit höchstens 10 Bit, spezifisch für das betreffende Terminal, und durch eine Takt-Ganzzahl, wobei das Resultat zurückgebracht wird zu dem Intervall bzw. Zwischenraum der Grenzen der gewählten Ganzzahl (E).

11. Vorrichtung nach einem der Ansprüche 1 bis 10, dadurch gekennzeichnet, daß die Sendeabfragen begleitet werden von einer Prioritätsinformation, entnommen aus einer festgelegten Liste von Prioritätsklassen, und dadurch, daß die Verwaltungsvorrichtung (DG) für jede Prioritätsklasse eine Größe $p_i$ unterhält, die repräsentativ ist für den Beanspruchungs- bzw. Überfüllungsgrad (taux d'encombrement) der Übertragungseinrichtung unter Berücksichtigung der Priorität, während jede laufende Abfrage nur berücksichtigt wird, wenn besagte Größe für ihre Prioritätsklasse in einer festgelegten Relation mit einer Zufallsgröße $(g(t))$ ist.

12. Vorrichtung nach Anspruch 11, dadurch gekennzeichnet, daß jede Größe $(p_i)$ variiert entsprechend einem festgelegten Gesetz, abhängig von besagtem Beobachtungssignal, um die Beanspruchung bzw. Überfüllung (encombrement), die sie repräsentiert, im Kollisionsscheibenfall zu vergrößern und im Leerscheibenfall zu verkleinern.

13. Vorrichtung nach Anspruch 12, dadurch gekennzeichnet, daß die Größe $(p_i)$ ebenfalls modifiziert wird, um die Beanspruchung bzw. Überfüllung, die sie repräsentiert, angesichts einer kollisionsfreien Übertragung zu verkleinern.

14. Vorrichtung nach einem der Ansprüche 11 bis 13, dadurch gekennzeichnet, daß die Größen $(p_i)$ und die Zufallsgröße $(g(t))$ einheitlich genormt sind, wobei die festgelegte Relation ein Vergleich der Zufallsgröße mit der betreffenden repräsentativen Größe $(p_i)$ ist.

15. Verfahren zum Auflösen von Kollisionen in einem Datenübertragungsnetz des Typs mit wahlfreiem bzw. direktem Zugriff, wo jedes Terminal versehen ist mit einem Netz-Interface, fähig zum Senden/Empfangen auf einer Übertragungseinrichtung oder einem Kanal mit Kanalüberwachung, um Ereignissignale zu erstellen, die selektiv die Detektions eines Übertragungsbeginns, die Detektions jeder neuen Kollision und die Detektion der Rückkehr des Kanals zum Leerzustand bzw. -status repräsentieren,

bei dem man als Folge auf eine Sendeabfrage eines Datenpakets das Paket sendet, gleich beim Erhalten des Kanal-leer-Status, mit, bei Ausbleiben von Kollision bei dieser Sendung, einer Bestätigung der Sendung des Datenpakets und Rückkehr in den Wartestatus auf eine Sendeabfrage eines anderen Datenpakets,

während bei Eintreten einer Kollision bei dieser Sendung die Sendung während einer ersten gewählten, "Kollisionsscheibe" genannten Zeitdauer (C) verlängert und dann unterbrochen wird,

**dadurch gekennzeichnet,** daß man als Antwort auf jedes Ereignissignal ein Kanalbeobachtungssignal aus einer festgelegten Menge von Möglichkeiten erstellt, wobei diese Menge die Übertragung (Sendung oder Empfang), die "Kollisionsscheibe" und die "Leerscheibe" umfaßt, wobei die zeitliche bzw. kurzzeitige Kollisionsscheibe beschränkt ist auf eine erste minimale Zeitdauer (C) ab jeder neuen Kollisionsdetektion, und die Leerscheibe nur vorhanden ist, wenn der Kanal-leer-Status während einer zweiten Minimaldauer (B) angedauert hat, die wenigstens gleich der maximalen Hin-und-Zurück-Fortpflanzungszeit eines Signals in dem Kanal ist, und kleiner als die erste Minimaldauer (C), und dadurch, daß, bei Eintreten einer Kollision,

i) man eine laufende Ganzzahl (E) mit einem Wert zwischen einschließlich einer ersten (0) und einer zweiten (M-1) Grenz-Ganzzahl initialisiert,
ii) man bei jeder neuen Beobachtung die laufende Ganzzahl (E) variiert entsprechend einem festgelegten Gesetz, abhängig von besagter Beobachtung, um sie im Falle von Häufigkeit von Kollisionsscheiben von der ersten Grenz-Ganzzahl (0) zu entfernen, und sie ihr im Falle von Häufigkeit von Leerscheiben zu nähern,
iii) die Sendung nur möglich ist, wenn die laufende Ganzzahl die erste Grenz-Ganzzahl (0) erreicht.

## Claims

1. Device for connecting a data processing apparatus to a transmission channel or medium, with a view to its participation in a computer network, comprising:

   - a network-interface (I;RE) , capable of sending/ receiving messages on the channel, with monitoring of the channel in order to establish event signals which selectively represent the detection of the start of a transmission on the channel, the detection of any new collision and the detection of the return of the channel to the vacant state,
   - a send/receive handling device (DG), for managing the network-interface on the basis of the event signals, and
   - a means whereby, in the case of a collision with regard to local sending, the send is maintained with collision signalling for at least a first minimum duration (C), after which all transmission is interrupted,

   characterized in that it comprises a channel observation register (RO) which receives the event signals and in response establishes a so-called channel observation signal, this observation signal having a predetermined set of possible states, which set comprises successful transmission (sending or receiving), "collision slot", or "vacant slot", whereas observation register refresh instants are defined at least at each vacant channel event,
   and in that the handling device (DG) comprises means for reacting to a request to send a new data packet by:

   a) a normal mode consisting in awaiting the next refresh of the observation register and in performing or not performing a first send attempt, on the basis of a predetermined criterion, applied to the state of the observation register, before this refresh,
   b) in the case of failure (send refusal or collision),

   b1) the initialization of a running integer (E), to a value lying between a first (0) and a second (M-1) limit integer, inclusive,
   b2) modification of the running integer (E) at each change of state of the observation register, according to a predetermined law which tends to move the running integer away from the first limit-integer (0) in case of abundance of collision slots, and to move it towards this limit in case of abundance of vacant slots,

   a return to the normal mode a) being authorized only when the running integer (E) has reached the first limit-integer (0), so that the reaction of the handling device to a request to send a new data packet is independent of the past history of the channel, upstream of the last normal mode executed.

2. Device according to Claim 1, characterized in that the predetermined criterion comprises the absence of any collision slot.

3. Device according to one of Claims 1 and 2, characterized in that the transmission (successful) observation is noted, after a start of transmission event, upon a channel vacant event not preceded by a collision since the start of transmission; in that the collision time slot observation is noted at the channel vacant event which follows the said sending with collision signalling; and in that the channel vacant observation is noted when the channel vacant event has endured for a second minimum duration (B).

4. Device according to one of Claims 1 to 3, characterized in that the initial value of the chosen integer (E) is substantially random.

5. Device according to one of Claims 1 to 4, characterized in that the running integer is also moved towards the first limit-integer in the presence of a collision-free transmission.

6. Device according to one of Claims 1 to 5, characterized in that the said predetermined law comprises:

   . as long as the running integer (E) is not equal to the first limit-integer (0), incrementing the running integer by a first chosen increment (M-1), if the state of the channel is collision slot, or decrementing the running integer by a second chosen increment (1) if the state of the channel is vacant slot, the ratio of the first increment to the second being substantially equal to the gap (M-1) between the two limit-integers.

7. Device according to one of Claims 1 to 6, characterized in that the sending/receiving handling device (DG) is send-disabled if a collision state already exists when it receives a send request.

8. Device according to one of Claims 1 to 7, characterized in that the gap (M-1) between the two limit-integers is substantially equal to the integer part of the ratio of the first duration (C) to the second (B).

9. Device according to one of Claims 1 to 8, characterized in that the chosen integer (E) is delivered by a pseudo-random generator (GPA) operating on an integer of at least 10 bits, modulated by at least one integer of at most 10 bits, which is specific to the relevant apparatus, the result being referred back to the interval of the limits of the said chosen integer (E).

10. Device according to Claim 9, characterized in that the chosen integer (E) is delivered by a pseudo-random generator (GPA) operating on an integer of at least 10 bits, modulated by at least one integer of at most 10 bits, which is specific to the relevant apparatus, and by a clock integer, the result being referred back to the interval of the limits of the said chosen integer (E).

11. Device according to one of Claims 1 to 10, characterized in that the send requests are accompanied by a priority cue, picked from a predetermined set of priority classes; and in that the handling device (DG) logs, for each priority class, a quantity $(P_i)$ representing the congestion factor for the transmission medium, having regard to priority, whereas any request in progress is taken into account only if the said quantity, for its priority class, is in a predetermined relationship with a random quantity $(g(t))$.

12. Device according to Claim 11, characterized in that each quantity $(P_i)$ varies according to a predetermined law dependent on the said observation signal, in order to increase the congestion which it represents in the case of a collision slot, and to decrease it in the case of a vacant slot.

13. Device according to Claim 12, characterized in that the quantity $(p_i)$ is also modified in order to decrease the congestion which it represents, in the presence of a collision-free transmission.

14. Device according to one of Claims 11 to 13, characterized in that the quantities $(p_i)$ and the random quantity $(g(t))$ are normalized to one, the predetermined relationship being a comparison of the random quantity with the relevant representative quantity $(p_i)$ .

15. Process for resolving collisions in a data transmission network of the random access type, in which each apparatus is furnished with a network-interface for sending/receiving on a transmission medium or channel, with monitoring of the channel so as to establish event signals which selectively represent the detection of a start of transmission, the detection of any new collision, and the detection of the return of the channel to the vacant state,

in which, following a request to send a data packet, the packet is sent upon obtaining the channel vacant state, with, in the absence of any collision in regard to this sending, validation of the sending of the data packet in progress and return to the awaiting of a request to send another data packet,

whereas in the presence of a collision in regard to this sending, the sending is prolonged for a first chosen duration (C), referred to as the "collision slot", and then interrupted;

characterized in that in response to any event signal, a channel observation signal is established from among a predetermined set of possibilities, this set comprising transmission (sending or receiving), "collision slot" and "vacant slot", the collision time slot being restricted to a first minimum duration (C), starting from any new collision detection, and the vacant slot existing only when the channel vacant state has endured for a second minimum duration (B), at least equal to the maximum round trip propagation time of a signal on the channel, and less than the first minimum duration (C), and in that, in the presence of a collision,

i) a running integer (E) is initialized to a value lying between a first (0) and a second (M-1) limit-integer, inclusive,

ii) at each new observation, the running integer (E) is varied, according to a predetermined law dependent on the said observation, in order to move it away from the first limit-integer (0) in case of abundance of collision slots, and to move it towards this limit in case of abundance of vacant slots,

iii) sending being possible only when the running integer (E) reaches the first limit-integer (0).

FIG.1

FIG.2

FIG.3

400 — requête d'émission
d'un nouveau paquet

401 — phase 1 d'observation
du canal

402 — tentative autorisée?

OUI

NON

403 — émettre
le paquet

430 — phase 2 d'observation

OUI

non collision? — NON

404

405 — E = entier
aléatoire

OUI — E>0? — NON

406

410 — recueillir l'observation o du canal

E = h ( o,E )

420

FIN

FIG. 4

```
          ┌─────────────────────┐
          │ requête d´émission  │──── 500
          │ d'un nouveau paquet │
          └─────────────────────┘
                     │
                     ▼
  OUI          ◇ Collision détectée ◇        NON
 ┌────────────       ?                 ─────────────────────┐
 │            501                                           │
 │                                            ┌─────────────────────┐
 │                                            │ émettre le paquet dès│
 │                                       503 ─│ que le canal est vide│
 │                                            └─────────────────────┘
 │                                                       │
 │                          OUI                          ▼            NON
 │                     ┌──────────────  ◇ collision ? ◇ ──────────────────┐
 │                     │                        504                       │
 │                     │                                                  │
 │                     ▼                                                  │
 │          ┌────────────────────────────┐                               │
 │          │ E = valeur entière donnée  │──── 505                       │
 │          │ par les D premiers bits de g(t)                            │
 │          └────────────────────────────┘                              │
 │                     │◄──────────────────────────┐                     │
 │         OUI         ▼              NON           │                     │
 │      ┌────────  ◇ E > 0 ? ◇ ──────────────────────────────────────────┘
 │      │                  506                      │
 │      │                  │                        │
 │      │                  ▼                        │
 │      │    ┌──────────────────────────────┐       │
 │      │    │ recueillir l'observation du canal │── 510 │
 │      │    └──────────────────────────────┘       │
 │      │                  │                        │
 │      │     OUI          ▼          NON            │
 │      │  ┌────────  ◇ tranche vide? ◇ ──────────┐  │
 │      │  │            512                       │  │
 │      │  │                        OUI ◇ tranche de ◇ NON
 │      │  │                         ┌── collision ──┐
 │      │  │                         │          514  │
 │      │  │   522        524        │               │  526
 │      │  │   ┌───────┐  ┌─────────┐ │   ┌───────┐
 │      │  │   │E = E-1│  │E=E+M-1  │◄┘   │E = E-1│
 │      │  │   └───────┘  └─────────┘     └───────┘
 │      │  │       │          │               │
 │      │  └───────┘          └───────────────┘
 │      │                                        │
 │      └────────────────────────────────────────┘
 │
 └──────────────────────────────────────────────────
```

FIG. 5

FIN

Sélectionner le paquet PDi en attente dans le tampon amont (soit i sa priorité) ⌐700

lire g(t) ⌐702

704 — OUI ◇ $g(t) \leq p_i(t)$ NON → attendre $T_A$ ⌐708

Transfert du paquet PDi au dispositif de gestion d'émission / réception attendre l'émission avec succès

706 —

FIG. 6

FONCTIONS $p_i(t)$

800 — lire la tranche canal et attendre sa fin.

802 — OUI ◇ tranche collision détectée NON

804 — $p_i(t) = max \{ m_i, a_i \, p(t) \}$

806 — $p_i(t) = min \{ M_i, b_i \, p(t) \}$

FIG. 7